(19) Europäisches Patentamt

European Patent Office

Office européen des brevets

(11) EP 1 724 772 A2

## (12) EUROPEAN PATENT APPLICATION

(43) Date of publication:
**22.11.2006 Bulletin 2006/47**

(51) Int Cl.:
**G11B 7/243** (2006.01)

(21) Application number: **06009680.7**

(22) Date of filing: **10.05.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **11.05.2005 JP 2005138659**

(71) Applicant: **SONY CORPORATION Tokyo (JP)**

(72) Inventor: **Kurokawa, Kotaro Shinagawa-ku Tokyo (JP)**

(74) Representative: **Müller - Hoffmann & Partner Patentanwälte, Innere Wiener Strasse 17 81667 München (DE)**

(54) **Phase-change type optical information recording medium**

(57)    A phase-change type optical information recording medium has a structure in which a phase-change type information recording layer (3) and an optical transparent light transmission protecting layer (4) are sequentially laminated on a supporting substrate (2), the phase-change type optical information recording medium being recorded and reproduced with irradiation of laser light incident from the side of the light transmission protecting layer (4), wherein the information recording layer (3) is made of a phase-change recording material having a composition of $M_x Sb_y Te_z$ (x, y and z are respectively atom%) in which the following equations are satisfied:

$$4 \leqq y/z \leqq 8$$

$$x + y + z = 100 \ [atom\%]$$

where M is elements V, Nb, Ta, Ti, Ge or a mixture of the element Ge and any one of the elements V, Nb, Ta and Ti. Thus, the phase-change type optical recording medium become able to carry out recording higher than twice normal speed recording with excellent characteristics with respect to a rewrite characteristic (DC erase ratio), a playback stability and a storage stability. Therefore, the phase-change type optical information recording medium according to the present invention becomes able to carry out high speed recording with a very small spot by a short wavelength and a high numerical aperture.

FIG. 1

EP 1 724 772 A2

**Description**

BACKGROUND OF THE INVENTION

Field of the Invention:

The present invention relates to a phase-change type optical information recording medium.

Description of the Related Art:

In optical information recording mediums, for example, optical discs, a phase-change type optical recording medium becomes the mainstream of rewritable optical discs.

This phase-change type optical information recording medium is able to form information bits, that is, to record information by changing the crystal state of its information recording layer, for example, the phase between the amorphous state and the crystal state with irradiation of light to thereby generate changes of an optical characteristic relative to a wavelength of available light, such as reflectance, transmittance or complex index of refraction, in recording portions of a recording layer.

Then, demands for making optical information recording mediums become larger in storage capacity and higher in speed are increased more and more and similar demands are being increased also in the phase-change type optical information recording mediums.

For example, a DVD-RW (digital versatile disc-rewritable) of which speed is four times normal speed and a DVD-RAM (digital versatile disc-random-access memory) of which speed is five times normal speed are now commercially available on the market.

In a Blu-ray Disc using blue laser light with a wavelength of 405 nm, for example, and a very small beam spot formed by an optical system with a high numerical aperture (N. A.) of about 0.85, a Blu-ray Disc of 25GB with a data transfer rate of 36 Mbps and a channel clock of 66 MHz has already been manufactured as a high-speed and large-capacity optical disc.

Also in the information recording medium such as the Blu-ray Disc, a demand for making the information recording medium become larger in capacity and higher in speed has been increased more. Therefore, it is desired to realize a phase-change type information recording medium extended as a future Blu-ray Disc, that is, a phase-change type information recording medium with a higher write speed, that is, a channel clock higher than 132 MHz (twice normal speed), for example, 264 MHz (four times normal speed) and which can satisfy all of sufficient recording and reproducing characteristic, storage stability, playback stability and the like.

As a phase-change type optical information recording medium which can be applied to one time normal speed Blu-ray Disc, there has been proposed a phase-change type optical information recording medium having an arrangement in which a phase-change material constructing its information recording layer has a base of a Sb - Te composition, an element Ge is added to the Sb - Te composition as a third element and an element V is added to the Sb - Te composition as a fourth element other than the element Ge to thereby decrease a jitter by specifying a composition ratio of these elements (see Cited Patent Reference 1, for example).

Also, there has been proposed a phase-change type optical information recording medium applicable to a Blu-ray Disc, for example, in which the eutectic composition of the elements Sb and Te is used, various kinds of added elements and compositions being selected.

However, there has not yet been obtained a phase-change type optical information recording medium in which all of the above-mentioned recording and reproducing characteristic, storage stability and playback stability can be satisfied, blue laser light with a wavelength of approximately 405 nm corresponding to the Blu-ray Disc standards is used and which can achieve high speed properties of speed higher than the twice normal speed applicable to a large numerical aperture (N. A.) of approximately 0.85.

A method of increasing a ratio of the element Sb is known as a method in which a high speed write characteristic can be improved by the eutectic composition material of the elements Sb - Te (see Cited Non-Patent Reference 1, for example).

However, if the ratio of the element Sb is increased, then reliability of the optical disc as the information storage medium is lowered, a storage stability (for example, properties for stably storing recorded information at a room temperature) is lowered and a playback stability (that is, recorded information may be prevented from being lost at the energy of laser light to read information).

Specifically, in the low speed recording, which is one time normal speed recording, in the previously-proposed phase-change type optical information recording medium applicable to the Blu-ray Disc, although the playback stability can be improved by addition of the above-mentioned third element Ge, for example, it is unavoidable that the addition of the element Ge causes the rewrite speed to be decreased. By way of example, when this media applicable to the one time normal speed recording is recorded at a high speed with a channel clock of 132 MHz, problems arise in information rewrite performance (DC erase ratio), reproducing light durability and storage stability.

[Cited Patent Reference 1]: Japanese Published Patent Application No. 2004-17342

As mentioned above, in the optical recording medium capable of high-density recording, that is, the optical recording medium capable of high-density recording and reproduction by using laser light with a wavelength of approximately 405 nm and a very small beam spot formed by an optical system with a numerical aperture (N. A.) of approximately 0.85, that is, optical recording medium corresponding to the so-called Blu-ray Disc, if the phase-change type optical information recording medium for recording information at a high speed higher than the twice normal speed follows the related-art arrangement, then it is not possible to construct a phase-change type optical information recording medium that can satisfy target rewrite characteristic, playback stability and storage stability.

SUMMARY OF THE INVENTION

In view of the aforesaid aspects, the present invention intends to provide a phase-change type optical information recording medium in which target rewrite characteristic, playback stability and storage stability can be satisfied.

Also, the present invention intends to provide a phase-change type optical information recording medium in which high speed recording and reproduction with speeds higher than at least twice normal speed to four times normal speed can be carried out.

According to an aspect of the present invention, there is provided a phase-change type optical information recording medium having a structure in which a phase-change type information recording layer and an optical transparent light transmission protecting layer are sequentially laminated on a supporting substrate, the phase-change type optical information recording medium being recorded and reproduced with irradiation of laser light incident from the side of the light transmission protecting layer, wherein the information recording layer is made of a phase-change recording material having a composition of $M_x Sb_y Te_z$ (x, y and z are respectively atom%) in which the following equations are satisfied:

$$4 \leqq y/z \leqq 8$$

$$x + y + z = 100 \ [atom\%]$$

and the element M is more than one kind of added elements formed of elements other than elements Sb and Te.

In the phase-change type optical information recording medium according to the present invention, the light transmission protecting layer has a thickness ranging of from 50 μm to 120 μm, the information recording layer includes a guide groove having a pitch ranging of from 0.27 μm to 0.37 μm and recording and/or reproduction corresponds to laser light having a wavelength ranging of from 400 to 410 nm.

In the phase-change type optical information recording medium according to the present invention, the added element M contains an element V and when $x_v$ [atom%] assumes a quantity of the added element V, the following equation is satisfied:

$$1 \leqq x_v \leqq 20 \ [atom\%]$$

In the phase-change type optical information recording medium according to the present invention, the added element M contains an element Nb and when $X_{Nb}$ [atom%] assumes a quantity of the added element Nb, the following equation is satisfied:

$$1 \leqq x_{Nb} \leqq 10 \ [atom\%]$$

In the phase-change type optical information recording medium according to the present invention, the added element M contains an element Ta and when $x_{Ta}$ [atom%] assumes a quantity of the added element Ta, the following equation is satisfied:

$$2 \leqq x_{Ta} \leqq 10 \ [atom\%]$$

In the phase-change type optical information recording medium according to the present invention, the added element M contains an element Ti and when $x_{Ti}$ [atom%] assumes a quantity of the added element Ti, the following equation is satisfied:

$$1.5 \leqq x_{Ti} \leqq 10 \ [atom\%]$$

In the phase-change type optical information recording medium according to the present invention, the added element M contains an element Ge and when $x_{Ge}$ [atom%] assumes a quantity of the added element Ge, the following equation is satisfied:

$$5 \leqq x_{Ge} \leqq 10 \ [atom\%]$$

In the phase-change type optical information recording medium according to the present invention, the added element M contains at least both of elements V and Ge and quantities $x_v$ and $x_{Ge}$ of the added elements V and Ge are selected so as to satisfy the following equations:

$$1 \leqq x_v \leqq 20 \ [atom\%]$$

$$5 \leqq x_{Ge} \leqq 10 \ [atom\%]$$

In the phase-change type optical information recording medium according to the present invention, the added element M contains at least both of elements Nb and Ge and quantities $x_{Nb}$ and $x_{Ge}$ of the added elements Nb and Ge are selected so as to satisfy the following equations:

$$1 \leqq x_{Nb} \leqq 10 \ [atom\%]$$

$$5 \leqq x_{Ge} \leqq 10 \ [atom\%]$$

Further, in the phase-change type optical information recording medium according to the present invention, the added element M contains at least both of elements Ta and Ge and quantities $x_{Ta}$ and $x_{Ge}$ of the added elements Ta and Ge are selected so as to satisfy the following equations:

$$2 \leqq x_{Ta} \leqq 10 \ [atom\%]$$

$$5 \leqq x_{Ge} \leqq 1o \ [atom\%]$$

Furthermore, in the phase-change type optical information recording medium according to the present invention, the added element M contains at least both of elements Ti and Ge and quantities $x_{Ti}$ and $x_{Ge}$ of the added elements Ti and Ge are selected so as to satisfy the following equations:

$$1.5 \leqq x_{Ti} \leqq 10 \ [atom\%]$$

$$5 \leqq x_{Ge} \leqq 10 \ [atom\%]$$

As described above, according to the phase-change type optical information recording medium of the present invention, although the phase-change recording material has the composition of $M_xSb_yTe_z$ in which the equation of $4 \leqq y/z \leqq 8$ is satisfied and which deviates from the related-art ordinary composition, it becomes possible for the phase-change type optical information recording medium with a high recording density, a large capacity, an available wavelength of approximately 400 nm, for example, a wavelength of 405 ± 5 nm and a numerical aperture of 0.85 ± 0.01, that is, phase-change type optical information recording medium applicable to the so-called Blu-ray Disc standards to carry out high speed writing with a speed higher than twice normal speed by specifying the composition of the added element M.

BRIEF DESCRIPTION OF THE DRAWINGS

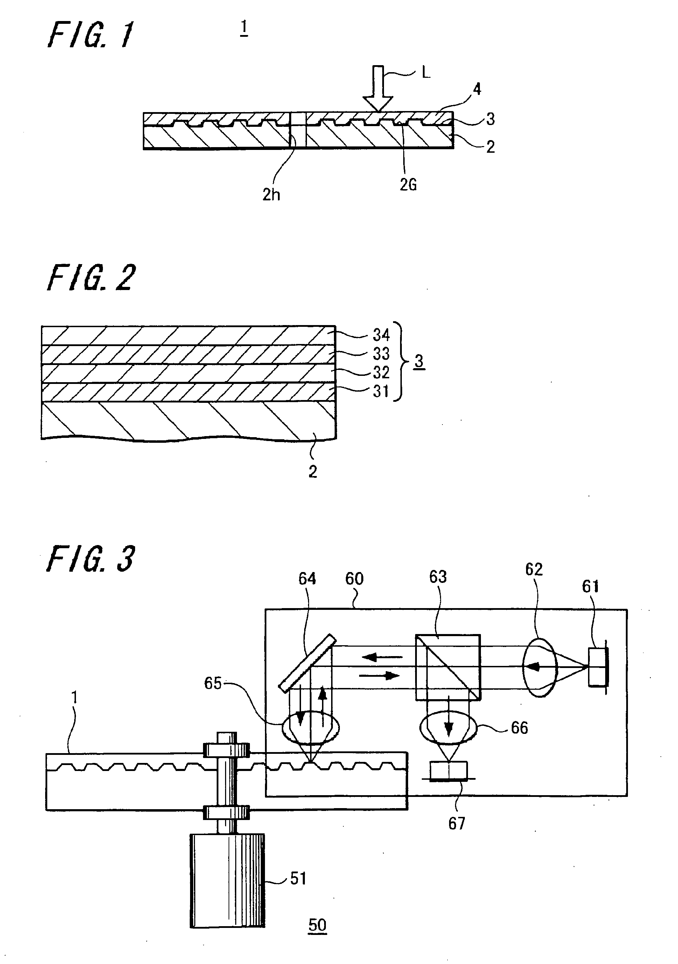

FIG. 1 is a schematic cross-sectional view showing an example of a phase-change type optical information recording medium according to the present invention;
FIG. 2 is a schematic diagram showing an arrangement of an example of a phase-change type optical information recording medium according to the present invention;
FIG. 3 is a schematic diagram showing an arrangement of an example of a recording and reproducing apparatus which may record and reproduce the phase-change type optical information recording medium according to the present invention;

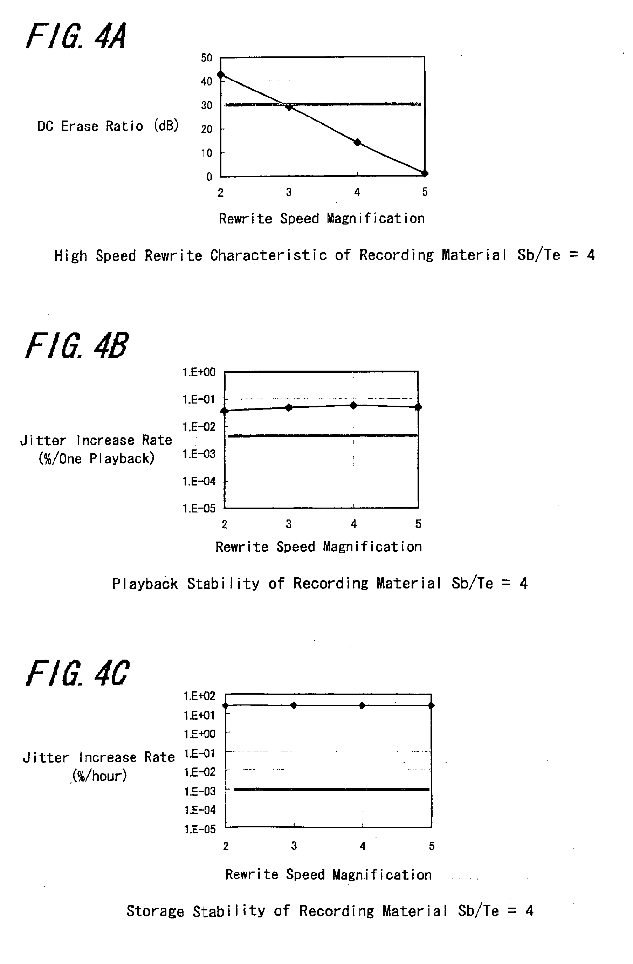

FIGS. 4A, 4B and 4C are respectively diagrams showing measured results of a high speed rewrite characteristic (DC erase ratio), a playback stability and a storage stability of a recording material Sb - Te and to which reference will be made in explaining the recording material Sb - Te that becomes a base of a phase-change recording material of a phase-change type optical information recording medium according to the present invention;

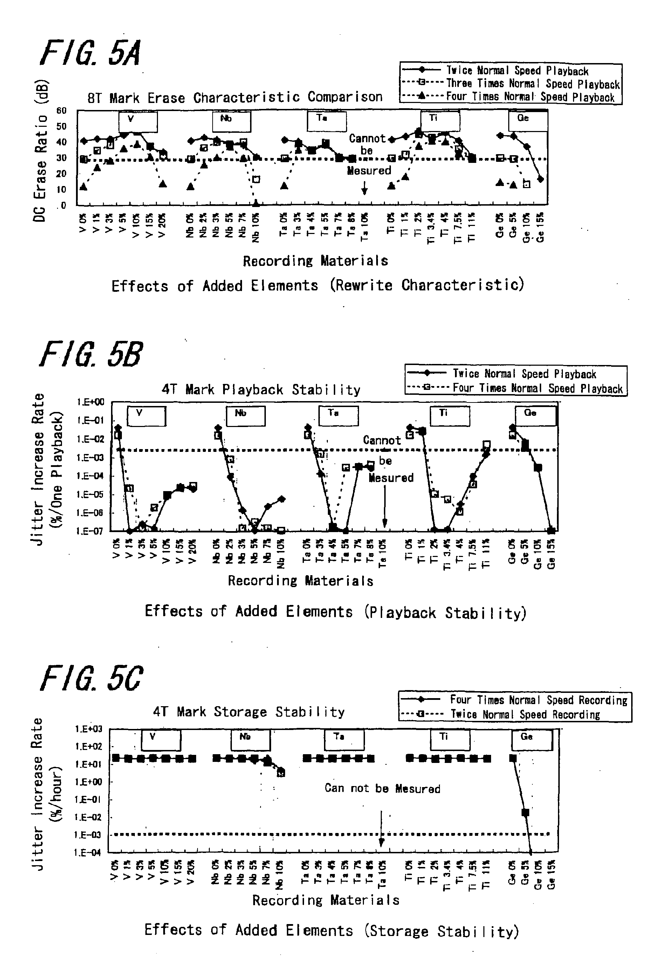

FIGS. 5A, 5B and 5C are respectively diagrams showing measured results of a rewrite characteristic (DC erase ratio), a playback stability and a storage stability obtained when added elements and quantities of the added elements to the phase-change recording material of a phase-change type optical information recording medium according to the present invention were changed;

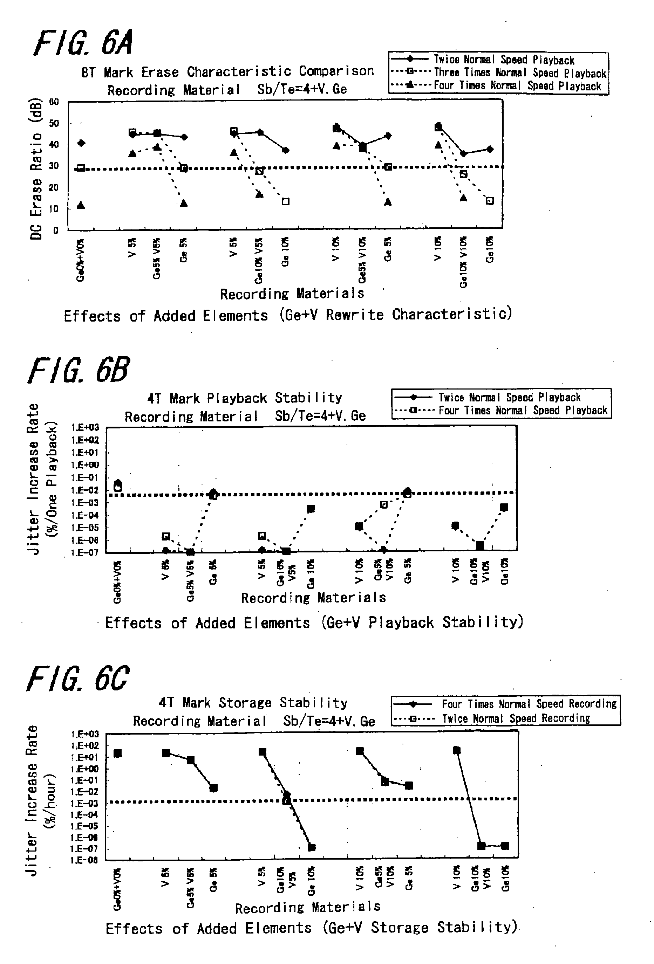

FIGS. 6A, 6B and 6C are respectively diagrams showing measured results of a rewrite characteristic (DC erase ratio), a playback stability and a storage stability obtained when quantities of added elements of a first element Ge and a second element V of a phase-change recording material of a phase-change type optical information recording material according to the present invention were changed;

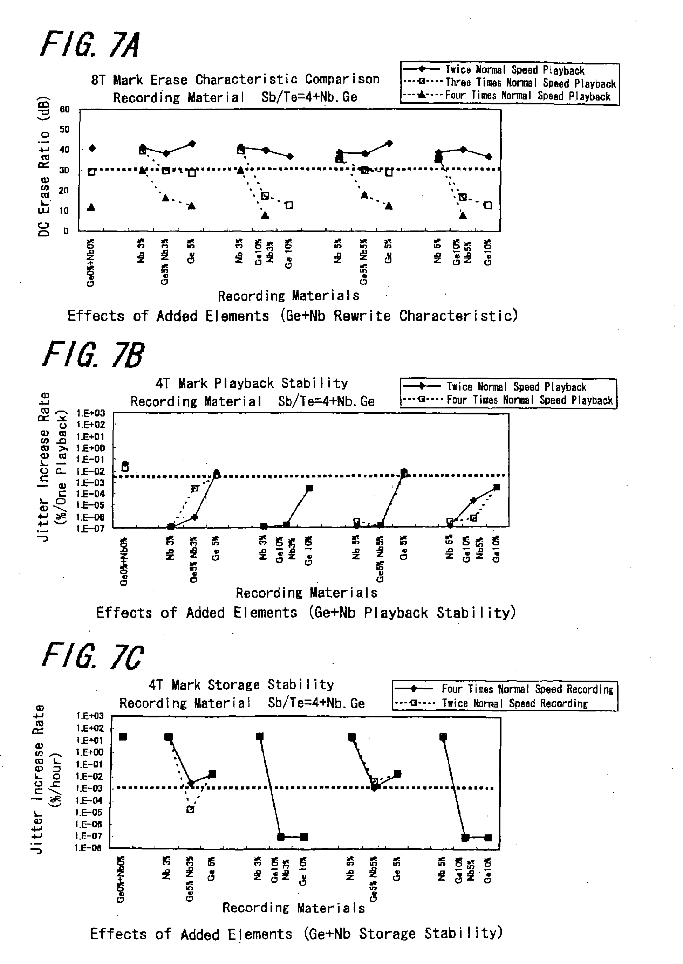

FIGS. 7A, 7B and 7C are respectively diagrams showing measured results of a rewrite characteristic (DC erase ratio), a playback stability and a storage stability obtained when quantities of added elements of a first element Ge and a second element Nb of a phase-change recording material of a phase-change type optical information recording material according to the present invention were changed;

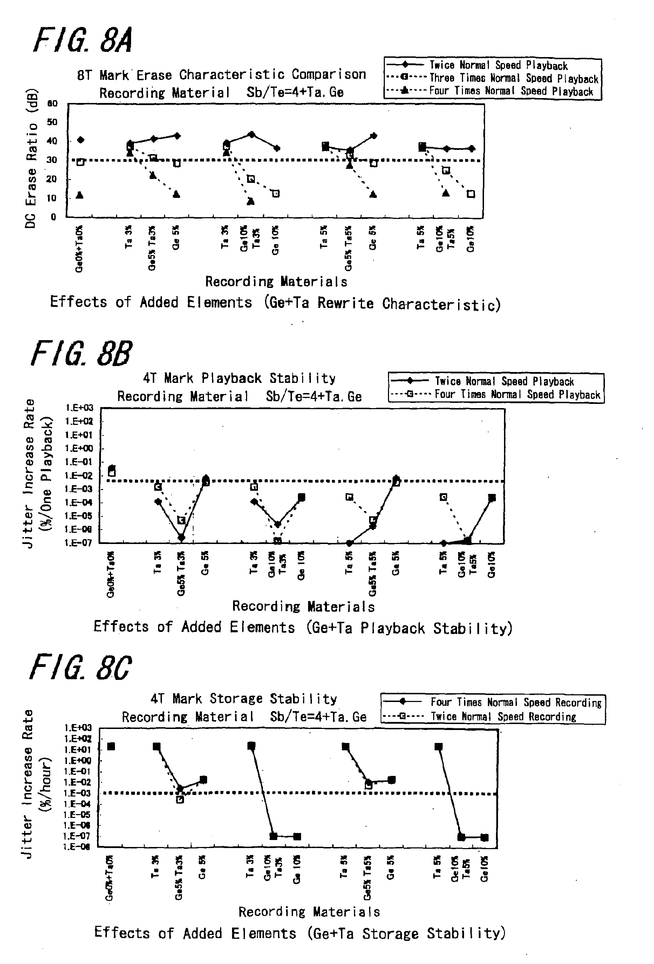

FIGS. 8A, 8B and 8C are respectively diagrams showing measured results of a rewrite characteristic (DC erase ratio), a playback stability and a storage stability obtained when quantities of added elements of a first element Ge and a second element Ta of a phase-change recording material of a phase-change type optical information recording material according to the present invention were changed;

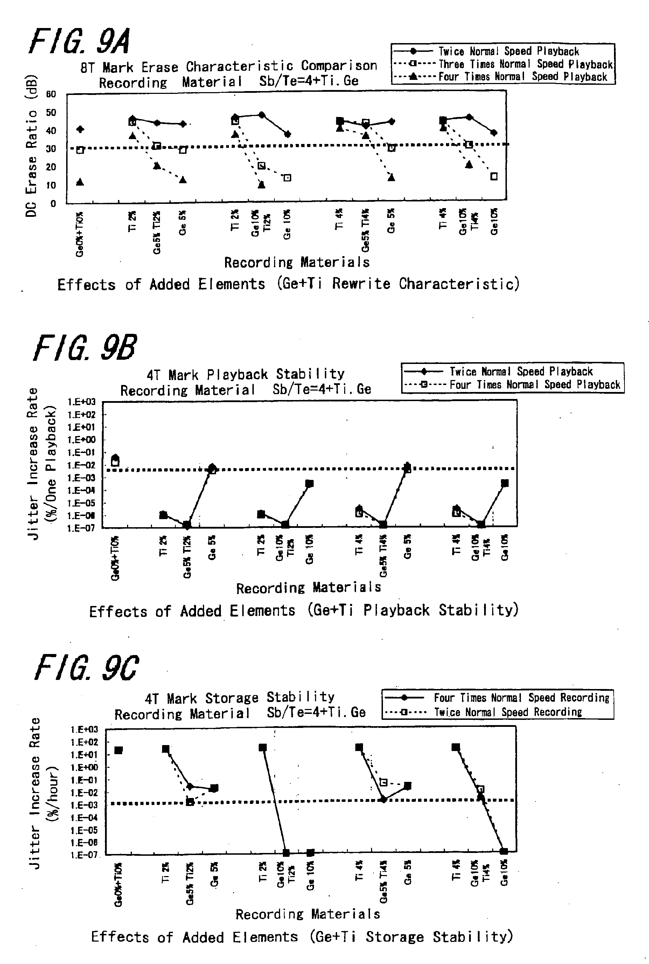

FIGS. 9A, 9B and 9C are respectively diagrams showing measured results of a rewrite characteristic (DC erase ratio), a playback stability and a storage stability obtained when quantities of added elements of a first element Ge and a second element Ti of a phase-change recording material of a phase-change type optical information recording material according to the present invention were changed;

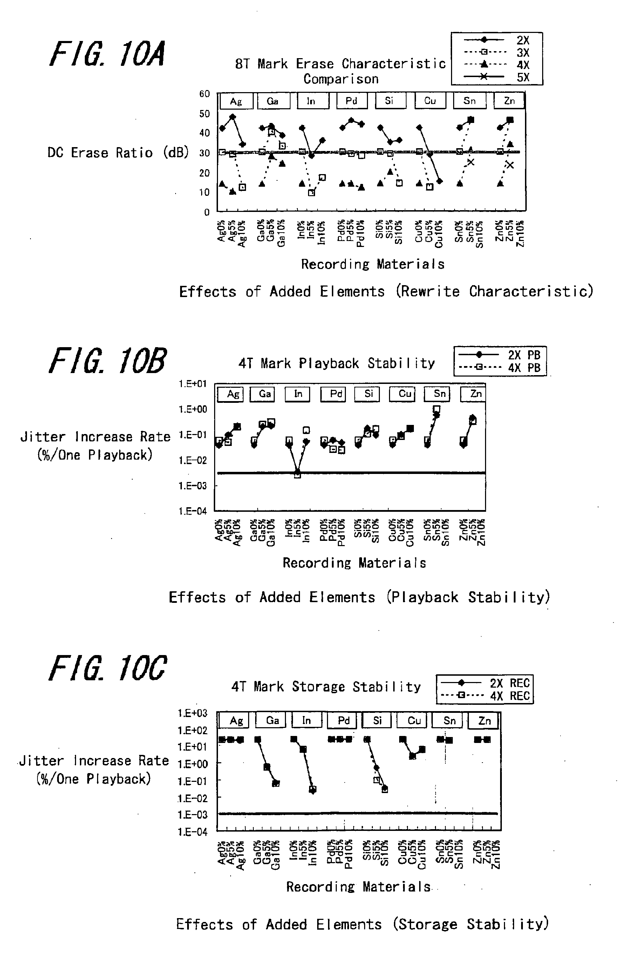

FIGS. 10A, 10B and 10C are respectively diagrams showing measured results of a rewrite characteristic, a playback stability and a storage stability obtained when added elements and quantities of added elements were changed according to the comparative examples;

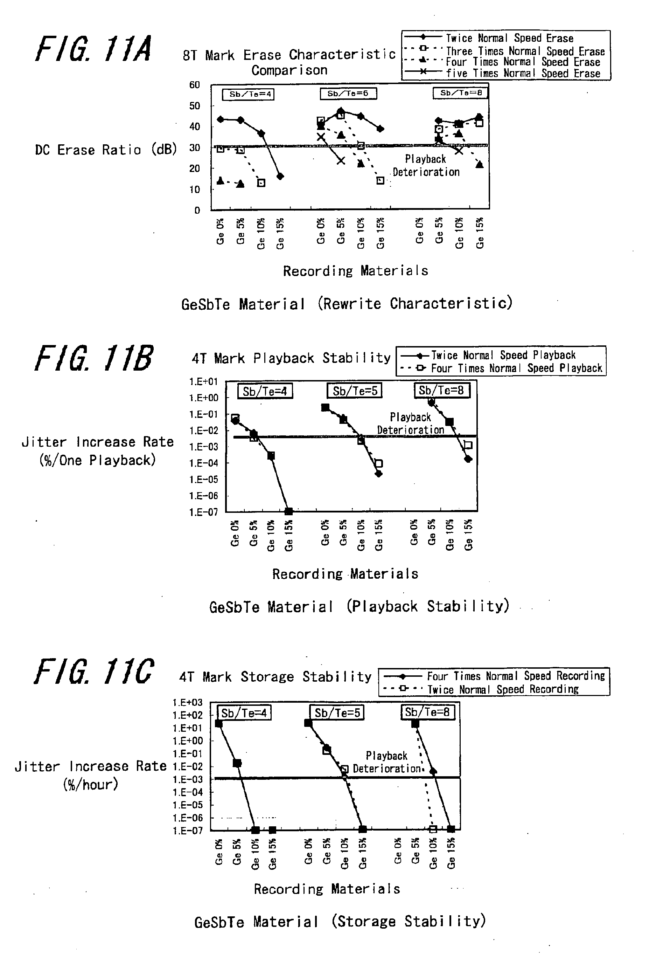

FIGS. 11A, 11B and 11C are respectively diagrams showing evaluations of measured results of a rewrite characteristic, a playback stability and a storage stability obtained when a quantity of an added element Ge and a composition ratio of Sb/Te of elements Sb and Te in the phase-change recording material of Ge - Sb/Te were changed;

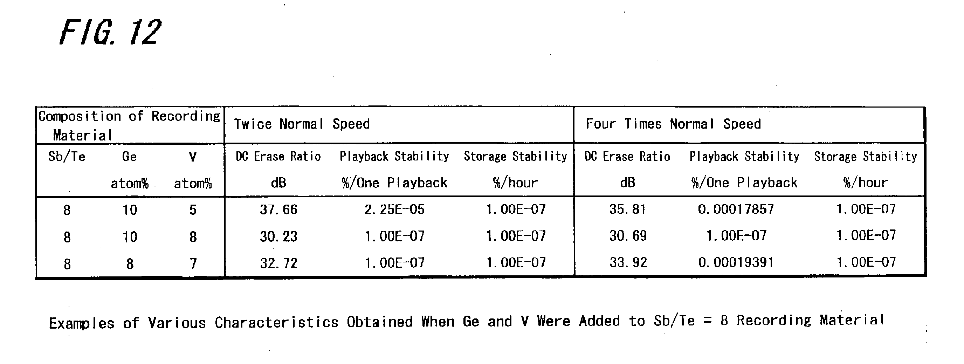

FIG. 12 is a table showing measured results of respective characteristics, that is, a DC erase ratio, a playback stability and a storage stability in the twice normal speed mode and the four times normal speed mode obtained when elements Ge and V were added to the recording material of Sb/Te = 8;

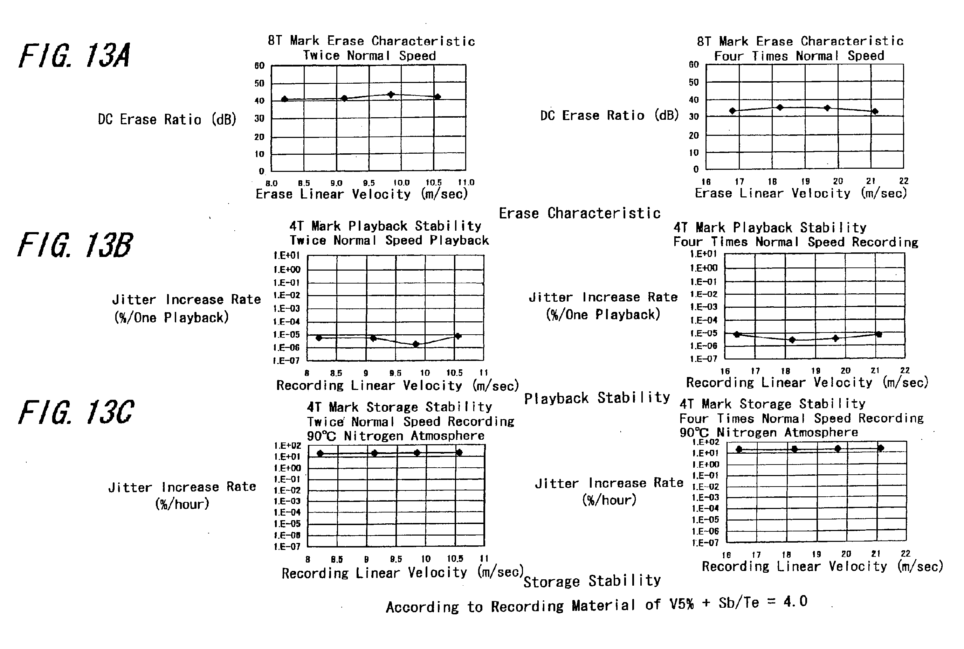

FIGS. 13A, 13B and 13C are respectively tables showing measured results of a DC erase characteristic, a playback stability and a storage stability relative to a linear velocity obtained when a recording material of V5% + Sb/Te =4.0 was used; and

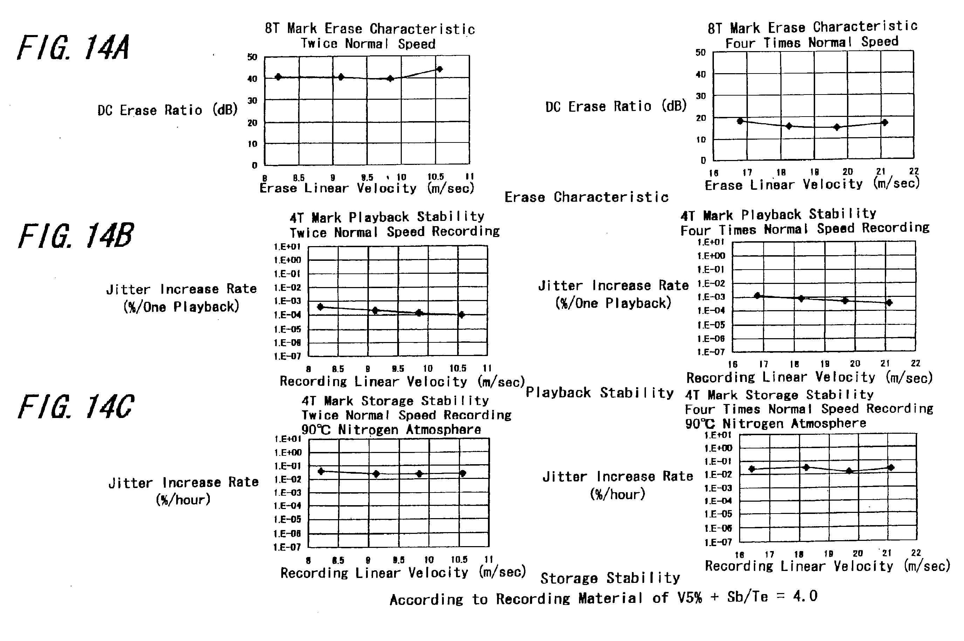

FIGS. 14A, 14B and 14C are tables showing measured results obtained when the scopes of a linear velocity definition were investigated from the standpoints of the DC erase characteristic, the playback stability and the storage stability by using a recording material of Ge5% + Sb/Te = 4.0.

## DESCRIPTION OF THE PREFERRED EMBODIMENTS

Prior to the description of the present invention, let us summarize the present invention as follows.

That is, in the present invention, having carried out enormous amounts of experiments, researches, developments and consideration, we discovered a phase-change type optical information recording medium having an arrangement of which composition deviates from that of a related-art phase-change type optical information recording medium and which corresponds to high linear velocity recording higher than twice normal speed, which has not been achieved so far, for example, which is applicable to the Blu-ray Disc standards and in which a recording characteristic, a storage stability, a playback stability and the like can coexist even when a channel clock is changed to a channel clock higher than 132 NHz (twice normal speed), especially, a channel clock higher than 264 MHz (four times normal speed).

A phase-change type optical information recording medium according to the embodiments of the present invention will now be described with reference to the drawings. However, the phase-change type optical information recording medium according to the present invention is not limited to a structure which will follow.

FIG. 1 of the accompanying drawings is a schematic cross-sectional view showing an example of a phase-change type optical information recording medium 1 obtained when the present invention was applied to a phase-change type optical disc.

As shown in FIG. 1, this phase-change type optical information recording medium 1 has a central hole 2h and an information recording medium 3 formed on a supporting substrate 2 formed of a suitable substrate such as a disc-like glass substrate and a resin substrate on which tracking guide grooves 2G are formed. A light transmission protecting layer 4 with light transmittance relative to recording and reproducing laser light is formed on this information recording layer 3.

The light transmission protecting layer 4 has a thickness ranging of from 50 $\mu$m to 120 $\mu$m and recording and reproducing laser light having a wavelength of 405 $\pm$ 5 nm is focused on and introduced into the phase-change optical information recording medium 1 from the side of the light transmission protecting layer 4 by an objective lens (not shown) with a numerical aperture of 0.85 $\pm$ 0.01.

The information recording layer 3 has formed thereon the tracking guide grooves 2G, each of which has a pitch ranging of from 0.27 $\mu$m to 0.37 $\mu$m.

FIG. 2 is a schematic cross-sectional view showing an arrangement of an information recording layer of an example of the phase-change type optical information recording medium 1 according to the present invention. As shown in FIG. 2, for example, the information recording layer 3 is a phase-change type optical information recording layer and it includes the supporting substrate 2 on which a metal film 31, a first transparent dielectric film 32, a phase-change information recording material layer 33 and a second transparent dielectric film 34 are deposited, in that order, by a suitable method such as a sputtering method.

While each of the first and second transparent dielectric layers 32 and 34 may be constructed by a single compound layer, it may have an arrangement in which more than two layers of different compound layers are laminated.

These compound layers may be constructed by a single compound or a mixture of different compounds. For example, these compounds can be constructed by $SiO_2$, SiN, $Al_2O_3$, AlN, GeN, $TiO_2$, $Ta_2O_5$, ZnO, ZnO-$SiO_2$, ZnS, ZnS-$SiO_2$ and the like.

The information recording layer 3 according to the arrangement shown in FIG. 2 has an optical multiple reflection film arrangement and it is desirable that its reflectance should be considerably changed depending on the case in which the recording material is either in the crystal state or in the amorphous state. To this end, it is desirable that the metal film 31 should have high reflectance and hence the metal film 31 can be constructed by main components of elements Ag and Al, for example.

A recording material of the phase-change information recording material layer 33 in the information recording layer 3 according to the present invention may have a composition of $M_x Sb_y Te_z$ (x, y and z are each atom%) and the following equations may be satisfied:

$$4 \leqq y/z \leqq 8$$

$$x + y + z = 100 \ [atom\%]$$

Then, in the above-described composition, the added element M may contain more than one kind of added elements other than elements Sb and Te. To be more concrete, the added element M may contain elements V, Nb, Ta, Ti, Ge or it may contain any one of the above-described elements V, Nb, Ta and Ti together with the element Ge.

Then, in this arrangement, the quantity of the added element V may be assumed to be $x_v$ and $x_v$ may be selected so as to satisfy the equation of $1 \leqq x_v \leqq 20$ [atom%].

A quantity of added element Nb may be assumed to be $x_{Nb}$ and $x_{Nb}$ may be selected so as to satisfy the equation of $1 \leqq x_{Nb} \leqq 10$ [atom%].

A quantity of added element Ta may be assumed to be $x_{Ta}$ and $x_{Ta}$ may be selected so as to satisfy the equation of $2 \leqq x_{Ta} \leqq 10$ [atom%].

A quantity of added element Ti may be assumed to be $x_{Ti}$ and $x_{Ti}$ may be selected so as to satisfy the equation of $1.5 \leqq x_{Ti} \leqq 10$ [atom%].

Also, a quantity of added element Ge may be assumed to be $x_{Ge}$ and $x_{Ge}$ may be selected so as to satisfy the equation of $5 \leqq x_{Ge} \leqq 10$ [atom%].

When the above-mentioned added element M contains both of added elements V and Ge, while a quantity of added element V may be assumed to be $x_v$ and $x_v$ may be selected so as to satisfy the equation of $1 \leqq x_v \leqq 20$ [atom%], a quantity of added element Ge may be assumed to be $x_{Ge}$ and $x_{Ge}$ may be selected so as to satisfy the equation of $5 \leqq x_{ge} \leqq 10$ [atom%].

When the above added element M contains both of the elements Nb and Ge, while a quantity of added element Nb may be assumed to be $x_{Nb}$ and $x_{Nb}$ may be selected so as to satisfy the equation of $1 \leqq x_{Nb} \leqq 10$ [atom%], a quantity of added element Ge may be assumed to be $x_{Ge}$ and $x_{Ge}$ may be selected so as to satisfy the equation of $5 \leqq X_{Ge} \leqq 10$ [atom%].

Further, when the above-mentioned added element M contains both of the added elements Ta and Ge, while a quantity of added element Ta may be assumed to be $x_{Ta}$ and $x_{Ta}$ may be selected so as to satisfy the equation of $2 \leqq x_{Ta} \leqq 10$ [atom%], a quantity of added element Ge assumed to be $x_{Ge}$ and $x_{Ge}$ may be selected so as to satisfy the equation of $5 \leqq x_{Ge} \leqq 10$ [atom%].

Furthermore, when the above-mentioned added element M contains both of added elements Ti and Ge, while a quantity of added element Ti may be assumed to be $x_{Ti}$ and $x_{Ti}$ may be selected so as to satisfy the equation of $1.5 \leqq x_{Ti} \leqq 10$ [atom%], a quantity of added element Ge may be assumed to be $x_{Ge}$ and $x_{Ge}$ may be selected so as to satisfy the equation of $5 \leqq x_{Ge} \leqq 10$ [atom%].

FIG. 3 is a schematic diagram showing an arrangement of an example of a recording and reproducing apparatus which is able to record and/or reproduce the phase-change type optical information recording medium 1 according to the present invention. In this embodiment, as shown in FIG. 3, this recording and reproducing apparatus includes a recording medium arrangement unit 50 and a movable optical system 51.

Referring to FIG. 3, the movable optical system 60 includes a light source unit 61 including a suitable light source such as a semiconductor laser, a collimator lens 62, a beam splitter 63, a mirror 64, an objective lens 65, a focusing lens 66 and a photodetector 67.

Then, by moving the movable optical system 60 relative to the phase-change type optical information recording medium 1, rotated by the spindle motor 51, in the radial direction of the phase-change type optical information recording medium 1, laser light from the light source unit 61 may scan the phase-change type optical information recording medium 1.

In this case, the phase-change type optical information recording medium 1 is located on the recording medium arrangement unit 50 such that the side on which its light transmission protecting layer 4 is located may become the upper surface, and the phase-change type optical information recording medium 1 is irradiated with laser light from the side of this light transmission protecting layer 4. Upon recording, this laser light is modulated in intensity in response to recording information and information bits are recorded on the recording layer of the phase-change type optical information recording medium 1 by phase change.

On the other hand, at that time, returned light from the phase-change type optical information recording medium 1 is split by the beam splitter 63 and introduced into the recording and reproducing apparatus by the photodetector 67, thereby resulting in a tracking error signal, a focusing error signal and the like being generated. Under control of these tracking error signal and focusing error signal, the movable optical system 60 may be focusing-servo-controlled and tracking-servo-controlled by a suitable means such as a biaxial actuator so that the movable optical system 60 may be quite fine adjusted in the direction perpendicular to the surface of the phase-change type optical information recording medium 1 and in the radial direction.

Then, upon reproduction, laser light with intensity smaller than that of laser light used upon recording is irradiated on the phase-change type optical information recording medium 1 from the light source unit 61. Then, the photodetector 67 may detect returned light modulated based on this recording information to provide a recording information signal (RF signal). In a like manner, a tracking error signal, a focusing error signal and the like may be obtained and the recording and reproducing apparatus may be focusing-servo-controlled and tracking-servo-controlled by these tracking error signal and focusing error signal and the like.

Then, properties of the above-mentioned phase-change type optical information recording medium according to the present invention will be evaluated from the standpoints of a DC erase ratio, a playback stability and a storage stability.

In this evaluation, one time normal speed was selected as recording and reproducing linear velocity required when a channel clock is 66 MHz in 25 GB according to the Blu-ray Disc fundamental specification, that is, 4.92 m/sec.

In this Blu-ray Disc fundamental specification, a numerical aperture (N. A.) of the objective lens 65 was selected to be 0.85, a wavelength of laser light was selected to be 405 nm and a 1-7PP system (that is, system using 1-7PP modulation code) was used.

In the optical disc of the phase-change type optical information recording medium 1, the light transmission protecting layer 4 on the side on which laser light becomes incident was selected to be 100 $\mu$m and a track pitch of the phase-change type optical information recording medium 1 was selected to be 0.32 $\mu$m.

At that time, a user data transfer clock becomes 36 Mbps.

Then, twice normal speed and three times normal speed might have channel clocks twice and three times as high as the channel clock of one time normal speed, recording and reproducing linear velocities twice and three times as high as those of one time normal speed and user data transfer rates twice and three times as high as those of one time normal speed but they might have the same user data amount.

Then, properties of the phase-change type optical information recording medium 1, such as a rewrite characteristic (DC erase ratio), a playback stability and a storage stability were evaluated by a drive apparatus whose fundamental arrangement was based on the arrangement of the above-mentioned recording and reproducing apparatus. These characteristics were evaluated as follows.

*[REWRITE CHARACTERISTIC (DC ERASE RATIO)]*

An 8T mono-carrier signal was recorded on the phase-change type optical information recording medium and then the recorded 8T mono-carrier signal was erased from the phase-change type optical information recording medium at DC power. The DC erase ratio was judged by using a ratio of carrier levels obtained before and after the 8T mono-carrier signal is erased from the phase-change type optical information recording medium. If the DC erase ratio is greater than 30 dB, it was judged that information can be rewritten.

The criterion reference value was a value which might be used usually.

*[PLAYBACK STABILITY]*

A 4T mono-carrier signal was recorded on the phase-change type optical information recording medium and then the recorded 4T mono-carrier signal was reproduced from the phase-change type optical information recording medium a plurality of times at high reproducing power. Then, while jitter values were being monitored, the manner in which the jitter values were deteriorated was observed.

A jitter value increase degree per playback ($\Delta$ jitter/one playback) was used as this evaluation function. DC light without high-frequency being superimposed was used as reproducing light. In the case of twice normal speed playback, power of 0.85 mW was used, and in the case of four times normal speed playback, power of 1.0 mW was used.

The criterion reference value was a jitter increase degree $\leqq 0.004\% \leqq$ one playback.

*[STORAGE STABILITY]*

The 4T mono-carrier signal was recorded on the phase-change type optical information recording medium and then the phase-change type optical information recording medium was left during a constant time period under heating circumstance with temperature of 90 °C and humidity of 0%. A jitter increase degree of a mono-carrier reproduced signal obtained at that time was used as a ($\Delta$ jitter %/heating time h) evaluation function.

Then, the criterion reference value in this evaluation was a jitter increase degree $\leqq$ 0.001%/one hour of heating.

First, in order to clearly understand the effects achieved on the characteristics by the added elements, FIGS. 4A, 4B and 4C show measured results of a rewrite characteristic (DC erase ratio), a playback stability and a storage stability obtained when the ratio Sb/Te between quantities of added Sb and Te was selected to be 4.0 with respect to the phase-change recording material Sb - Te which becomes the base of the phase-change recording material.

As is clear from FIGS. 4A, 4B and 4C, while the recording material of Sb/Te = 4.0 has sufficiently high speed rewrite capabilities at the speed near twice normal speed, it is inferior in playback stability and storage stability.

Next, measured results of the above-mentioned respective characteristics with respect to the phase-change type optical information recording medium according to the present invention will be described below.

*[CHARACTERISTICS OF PHASE-CHANGE TYPE OPTICAL INFORMATION RECORDING MEDIUM ACCORDING TO THE PRESENT INVENTION]*

FIGS. 5A, 5B and 5C show measured results of rewrite characteristics (DC erase ratios), playback stabilities and storage stabilities obtained when the phase-change type optical information recording medium was made of the recording material Sb - Te used as the base, the ratio Sb/Te between the quantities of added Sb and Te were set to Sb/Te shown in FIGS. 4A to 4C, V, Nb, Ta, Ti and Ge were used as added elements and the quantities of these added elements were changed including 0%, respectively.

Further, FIGS. 6A, 6B and 6C show measured results of rewrite characteristics (DC erase ratios), playback stabilities and storage stabilities obtained when the elements V, Nb, Ta, Ti and Ge were similarly used as the added elements and the quantity $x_V$ of the added element V was changed in the state in which the first added element was set to Ge and the second added element was set to V, respectively.

FIGS. 7A, 7B and 7C show measured results of rewrite characteristics (DC erase ratios), playback stabilities and storage stabilities obtained when the elements V, Nb, Ta, Ti and Ge were similarly used as the added elements and the quantity $x_{Nb}$ of the added element Nb was changed in the state in which the first added element was set to Ge and the second added element was set to Nb, respectively.

Also, FIGS. 8A, 8B and 8C show measured results of rewrite characteristics (DC erase ratios), playback stabilities and storage stabilities obtained when the elements V, Nb, Ta, Ti and Ge were similarly used as the added elements and the quantity $x_{Ta}$ of the added element Ta was changed in the state in which the first added element was set to Ge and the second added element was set to Ta, respectively.

Also, FIGS. 9A, 9B and 9C show measured results of rewrite characteristics (DC erase ratios), playback stabilities and storage stabilities obtained when the elements V, Nb, Ta, Ti and Ge were similarly used as the added elements and the quantity $x_{Ti}$ of the added element Ti was changed in the state in which the first added element was set to Ge and the second added element was set to Ti, respectively.

In the measurements of FIGS. 5A, 5B, 5C to FIGS. 9A, 9B and 9C, solid rhombuses, open squares and solid triangles show measured results of rewrite characteristics in the twice normal speed playback mode, the three times normal speed playback mode and the four times normal speed playback mode, respectively; solid rhombuses and open squares show measured results of playback stabilities in the twice normal speed playback mode and the four times normal speed playback mode; and solid rhombuses and open squares show measured results of storage stabilities of the four time normal speed recording mode and the twice normal speed recording mode, respectively. Next, measured results of similar characteristics obtained when the following added elements were used in the related-art ordinary phase-change recording material were shown as comparative examples.

*[CHARACTERISTICS OF PHASE-CHANGE TYPE OPTICAL INFORMATION RECORDING MEDIUM IN COMPARATIVE EXAMPLES]*

Specifically, the added elements in this case were set to Si, Sn, Ga, In, Zn, Cu, Ag and Pd, respectively.

FIGS. 10A, 10B and 10C show similar measured results of rewrite characteristics (DC erase ratios), playback stabilities and storage stabilities obtained when the quantities of these added elements were changed, respectively.

A study of measured results shown in FIGS. 10A, 10B and 10C may reveal that elements Sn and Zn are added elements which can improve high speed rewrite characteristics. However, these added elements Sn and Zn are added elements which may tend to deteriorate playback stabilities and storage stabilities rather than added elements which can improve playback stabilities and storage stabilities.

Although the added elements Ga and Si are able to improve storage stabilities, it is to be understood that the added elements Ga and Si tend to deteriorate playback stabilities. These added elements Ga and Si can neither improve nor deteriorate high speed rewrite characteristics.

The added element In can improve low speed rewrite characteristics rather than high speed rewrite characteristics and concurrently therewith, the added element In can improve playback stabilities and storage stabilities. It should be appreciated that the added element In is not suitable for improving high speed rewrite characteristics.

Also, it is to be understood that the added elements Ag, Pd and Cu cause both of the storage stabilities and the playback stabilities to be deteriorated and that they are unable to improve high speed rewrite characteristics.

From the above descriptions, it is to be understood that the phase-change type optical information recording mediums using the elements Si, Sn, Ga, In, Zn, Cu, Ag and Pd are not suitable for the application to the high speed rewriting.

As compared with the above related-art phase-change type optical information recording mediums, it is clear from FIGS. 5A, 5B, 5C to FIGS. 9A, 9B and 9C that the phase-change type optical information recording medium according to the present invention has excellent characteristics in the erase ratio, the playback stabilities and the storage stabilities at the write speed higher than the twice normal speed in the aforementioned definitions.

Specifically, from FIGS. 5A, 5B and 5C, it is to be understood that respective characteristics, in particular, playback stabilities can be considerably improved in the specific ranges of the added elements V, Nb, Ta and Ti, that is, in the quantities of the added elements of the arrangement of the present invention.

Further, in the addition of the added element Nb, it is to be understood that, when the added element Nb is added with the quantity of larger than 5 atom%, the storage stabilities tend to be improved.

Also, having examined the added element Ge, it is to be understood that, although the high speed rewrite characteristics tend to be lowered with addition of the added element Ge, when the added element Ge is added to the phase-change optical information recording material, the playback stabilities can be improved and that the storage stabilities can be considerably improved as compared with the case in which the added elements were added to the phase-change optical information recording material as shown in FIGS. 10A, 10B and 10C.

In other words, it is to be understood that the added elements V, Nb, Ta, Ti and Ge can achieve the effects in which they can improve the playback stabilities or the storage stabilities while maintaining and improving the high speed rewrite characteristics.

Then, according to the arrangement of the present invention, as is clear from FIGS. 5A, 5B and 5C, the inventive phase-change type optical information recording mediums in which the respective quantities $x_v$, $x_{Nb}$, $x_{Ta}$ and $x_{Ti}$ of the added elements V, Nb, Ta and Ti were selected so as to satisfy the following equations:

$$1 \leqq x_v \leqq 20 \ [\text{atom\%}]$$

$$1 \leqq x_{Nb} \leqq 10 \ [\text{atom\%}]$$

$$2 \leqq x_{Ta} \leqq 10 \ [\text{atom\%}]$$

$$1.5 \leqq x_{Ti} \leqq 10 \ [\text{atom\%}]$$

Can achieve the effects in which the high speed rewrite characteristics and the playback stabilities can be improved in the region of the linear velocities higher than twice normal linear velocity.

Further, when at least elements of these added elements V, Nab, Ta and Ti, for example, the added elements V and Ge are both added to the phase-change optical information recording material, as shown in FIGS. 6A, 6B and 6C, intermediate effects of the added elements V and Ge can be achieved in the high speed recording characteristics and the storage stabilities inherent in the added elements V and Ge. It is clear that synergic effects can be achieved in the playback stability and that satisfactory results can be obtained as compared with the case in which only the added element V or Ge was added to the phase-change optical information recording material. Specifically, it is to be understood that the added elements V and Ge may almost act independently and that they may behave as if the addition and subtraction rule were established in the effects between the added elements.

In a like manner, when the added elements Nb, Ta and Ti are added to the phase-change optical information recording material together with the added element Ge, as shown in FIGS. 7A, 7B, 7C to FIGS. 9A, 9B and 9C, there can be obtained an inclination similar to that obtained in the state in which the added element V was added to the phase-change optical information recording material together with the added element Ge.

Then, by well balancing the added quantity of the added element Ge and those of the added elements V, Nb, Ta and Ti, it is possible to maintain all of three characteristics of the high speed rewrite characteristic, the playback stability and the storage stability in the range of greater than twice normal speed.

Further, in the recording material of Ge + (V, Ta, Ti), by adjusting the composition ratio, it might be possible to satisfy all of three characteristics of the high speed rewrite characteristics, the playback stability and the storage stability in the range of from twice to four times normal speed.

With respect to the ranges of the added element Ge and the quantity ratio of the added elements Sb and Te, FIGS. 11A, 11B and 11C show measured results of rewrite characteristics, playback stabilities and storage stabilities evaluated when the quantity $x_{Ge}$ of the added element Ge and the quantity ratio Sb/Te of the added elements Sb and Te were changed in the Ge - Sb/Te recording material.

From FIGS. 11A, 11B and 11C, it is clear that characteristics in the twice normal speed can be obtained when the quantity ratio Sb/Te of the added elements Sb and Te is greater than 4 and the quantity $x_{Ge}$ of the added element Ge is greater than 5 [atom%]

Also, although it is difficult to satisfy all characteristics in the state in which the linear velocity is higher than four times normal speed, having noticed only the rewrite characteristic, it is to be understood that the rewrite characteristic can be maintained when the added quantity ratio of Sb/Te lies in a range of from approximately 5 to 8.

Further, when the quantity ratio of Sb and Te of the added elements Sb and Te is set to 8 (Sb/Te = 8), it is also clear that the storage stability can be maintained when the quantity of the added element Ge is set to 10 [atom%] and that relatively satisfactory results can be obtained in the playback stability.

It becomes possible to maintain all of the rewrite characteristic, the playback stability and the storage stability by adding the element V, for example, when the quantity ratio of the Sb/Te of the added elements Sb and Te is set to 8 (Sb/Te = 8) and the quantity of the added element Ge is set to 10 [atom%].

Also, FIG. 12 is a table showing measured results of respective characteristics, that is, DC erase ratios, playback stabilities and storage stabilities in the twice normal speed and four times normal speed obtained when the quantity ratio of Sb and Te of the added elements Sb and Te was set to 8 (Sb/Te = 8) and the elements Ge and V were added to the phase-change optical information recording material.

As is clear from the measured results on the table of FIG. 12, it is to be understood that the above-mentioned characteristics can be maintained till the quantity of the added element Ge reaches 10 [atom%] and that those characteristics can also be maintained the ratio of y/z of the quantities of the added elements Sb and Te reaches 8 times.

Specifically, from FIGS. 5A, 5B, 5C and the like and FIG. 12, it is to be understood that the objects of the present invention can be attained when the ratio y/z of the quantities of the added elements Sb and Te and the quantity $x_{Ge}$ of the added element Ge are selected so as to satisfy the following equations:

$$4 \leqq y/z \leqq 8$$

$$5 \leqq x_{Ge} \leqq 10 \ [\text{atom\%}]$$

Then, from FIGS. 6A, 6B, 6C, FIGS. 7A, 7B, 7C, FIGS. 8A, 8B, 8C, FIGS. 9A, 9B, 9C and FIGS. 11A, 11B and 11C, it is to be understood that, if the added elements are used in the following ranges, then satisfactory results of the high speed rewrite characteristic, the playback stability and the storage stability can be obtained.

That is, when the elements Ge and V are both added to the phase-change optical information recording material at the same time, the following equations should be satisfied:

$$1 \leqq x_{v} \leqq 20 \ \text{and} \ 5 \leqq x_{Ge} \leqq 10 \ [\text{atom\%}]$$

When the elements Ge and Nb are both added to the phase-change optical information recording material at the same time, the following equations should be satisfied:

$$1 \leqq x_{Nb} \leqq 10 \text{ and } 5 \leqq x_{Ge} \leqq 10 \text{ [atom\%]}$$

When the elements Ge and Ta are both added to the phase-change optical information recording material at the same time, the following equations should be satisfied:

$$2 \leqq x_{Ta} \leqq 10 \text{ and } 5 \leqq x_{Ge} \leqq 10 \text{ [atom\%]}$$

When the elements Ge and Ti are both added to the phase-change optical information recording material at the same time, the following equations should be satisfied:

$$1.5 \leqq x_{Ti} \leqq 10 \text{ and } 5 \leqq x_{Ge} \leqq 10 \text{ [atom\%]}$$

As is clear from the above detailed descriptions, according to the arrangement of the present invention, the optical recording medium capable of high density recording and reproducing by a very small beam spot with a numerical aperture (N. A.) of approximately 0.85 and an available wavelength of approximately 405 nm, that is, the optical recording medium corresponding to the so-called Blu-ray Disc (BD) becomes able to improve the recording characteristic, the playback stability and the storage stability in the rewrite speed region of higher than twice normal speed.

Further, it becomes possible for the phase-change optical information recording material of Ge + (V, Ta, Ti) to improve the three characteristics of the high speed rewrite characteristic, the playback stability and the storage stability in the range of speed from twice normal speed to four times normal speed.

In the above-mentioned evaluations, the standard in which user data capacity corresponds to 25GB which is the Blu-ray Disc fundamental specification, that is, 4.92 m/sec is assumed to be one time normal speed. In actual standard, a linear velocity is set to in response to an amount data that can be recorded on the phase-change type optical information recording medium. Specifically, when user data capacity falls within a range of from 23.3GB to 30GB, one time normal speed becomes 5.28 m/sec to 4.10 m/sec.

Accordingly, similar erase characteristics (DC erase ratios), playback stabilities and storage stabilities of a first recording material in which the element V of the added quantity of 5% was added to the typical recording material of Sb/Te = 4.0 and a second recording material in which the element Ge of the added quantity of 5% was added to the typical recording material of Sb/Te = 4.0 of the above-mentioned recording materials were measured with respect to the twice normal speed mode and the four times normal speed mode when the linear velocity was set to a range of one time normal speed from 4.10 m/sec to 5.28 m/sec. FIGS. 13A, 13B and 13C show measured results of erase characteristics (DC erase ratios), playback stabilities and storage stabilities of the first recording material, and FIGS. 14A, 14B and 14C show measured results of those of the second recording material.

According to these measured results, from FIGS. 13A, 13B, 13C and FIGS. 14A, 14B and 14C, it is to be understood that the rewrite characteristics, the storage stabilities and the playback stabilities are not considerably affected even in this linear velocity range.

Specifically, the target phase-change type optical information recording medium according to the present invention can realize a phase-change type optical information recording medium of which one time normal speed lies in a range of from 4.10 m/sec to 5.28 m/sec and which is capable of high speed recording and reproduction with linear velocity higher than at least twice normal speed up to four times normal speed.

The structure of the phase-change type optical information recording medium according to the present invention is not limited to the disc arrangement and the film structure shown in FIGS. 1 and 2.

As described above, according to the phase-change type optical information recording medium of the present invention, although the phase-change recording material has the composition of $M_x Sb_y Te_z$ in which the equation of $4 \leqq y/z \leqq 8$ is satisfied and which deviates from the related-art ordinary composition, it becomes possible for the phase-change type optical information recording medium with a high recording density, a large capacity, an available wavelength near 400 nm, for example, a wavelength of $405 \pm 5$ nm and a numerical aperture of $0.85 \pm 0.01$, that is, phase-change type optical information recording medium corresponding to the so-called Blu-ray Disc standards to carry out high speed writing with speed higher than twice normal speed by specifying the composition of the added element M.

It should be understood by those skilled in the art that various modifications, combinations, sub-combinations and alterations may occur depending on design requirements and other factors insofar as they are within the scope of the appended claims or the equivalents thereof.

**Claims**

1.  A phase-change type optical information recording medium having a structure in which a phase-change type information recording layer and an optical transparent light transmission protecting layer are sequentially laminated on a supporting substrate, said phase-change type optical information recording medium being recorded and reproduced with irradiation of laser light incident from the side of said light transmission protecting layer, wherein said information recording layer is made of a phase-change recording material having a composition of $M_x Sb_y Te_z$ (x, y and z are respectively atom%) in which the following equations are satisfied:

$$4 \leqq y/z \leqq 8$$

$$x + y + z = 100 \; [\text{atom\%}]$$

and an element M is more than one kind of added elements formed of elements other than elements Sb and Te.

2.  A phase-change type optical information recording medium according to claim 1, wherein said light transmission protecting layer has a thickness ranging of from 50 μm to 120 μm, said information recording layer includes a guide groove having a pitch ranging of from 0.27 μm to 0.37 μm and recording and/or reproducing corresponds to laser light having a wavelength ranging of from 400 to 410 nm.

3.  A phase-change type optical information recording medium according to claim 1 or 2, wherein said added element M contains an element V and when $x_v$ [atom%] assumes a quantity of said added element V, the following equation is satisfied:

$$1 \leqq x_v \leqq 20 \; [\text{atom\%}]$$

4.  A phase-change type optical information recording medium according to claim 1 or 2, wherein said added element M contains an element Nb and when $x_{Nb}$ [atom%] assumes a quantity of said added element Nb, the following equation is satisfied:

$$1 \leqq x_{Nb} \leqq 10 \; [\text{atom\%}]$$

5.  A phase-change type optical information recording medium according to claim 1 or 2, wherein said added element M contains an element Ta and when $x_{Ta}$ [atom%] assumes a quantity of said added element Ta, the following equation is satisfied:

$$2 \leqq x_{Ta} \leqq 10 \; [\text{atom\%}]$$

6.  A phase-change type optical information recording medium according to claim 1 or 2, wherein said added element M contains an element Ti and when $x_{Ti}$ [atom%] assumes a quantity of said added element Ti, the following equation is satisfied:

$$1.5 \leqq x_{Ti} \leqq 10 \ [atom\%]$$

7.  A phase-change type optical information recording medium according to claim 1 or 2, wherein said added element M contains an element Ge and when $x_{Ge}$ [atom%] assumes a quantity of said added element Ge, the following equation is satisfied:

$$5 \leqq x_{Ge} \leqq 10 \ [atom\%]$$

8.  A phase-change type optical information recording medium according to claim 1 or 2, wherein said added element M contains at least both of elements V and Ge and quantities $x_V$ and $x_{Ge}$ of said added elements V and Ge are selected so as to satisfy the following equations:

$$1 \leqq x_V \leqq 20 \ [atom\%]$$

$$5 \leqq x_{Ge} \leqq 10 \ [atom\%]$$

9.  A phase-change type optical information recording medium according to claim 1 or 2, wherein said added element M contains at least both of elements Nb and Ge and quantities $x_{Nb}$ and $x_{Ge}$ of said added elements Nb and Ge are selected so as to satisfy the following equations:

$$1 \leqq x_{Nb} \leqq 10 \ [atom\%]$$

$$5 \leqq x_{Ge} \leqq 10 \ [atom\%]$$

10. A phase-change type optical information recording medium according to claim 1 or 1, wherein said added element M contains at least both of elements Ta and Ge and quantities $x_{Ta}$ and $x_{Ge}$ of said added elements Ta and Ge are selected so as to satisfy the following equations:

$$2 \leqq x_{Ta} \leqq 10 \ [atom\%]$$

$$5 \leqq x_{Ge} \leqq 1o \ [atom\%]$$

**11.** A phase-change type optical information recording medium according to claim 1 or 2, wherein said added element M contains at least both of elements Ti and Ge and quantities $x_{Ti}$ and $x_{Ge}$ of said added elements Ti and Ge are selected so as to satisfy the following equations:

$$1.5 \leqq x_{Ti} \leqq 10 \ [atom\%]$$

$$5 \leqq x_{Ge} \leqq 10 \ [atom\%]$$

FIG. 1

FIG. 2

FIG. 3

## FIG. 4A

DC Erase Ratio (dB)

Rewrite Speed Magnification

High Speed Rewrite Characteristic of Recording Material Sb/Te = 4

## FIG. 4B

Jitter Increase Rate (%/One Playback)

Rewrite Speed Magnification

Playback Stability of Recording Material Sb/Te = 4

## FIG. 4C

Jitter Increase Rate (%/hour)

Rewrite Speed Magnification

Storage Stability of Recording Material Sb/Te = 4

## FIG. 5A

8T Mark Erase Characteristic Comparison

- ◆— Twice Normal Speed Playback
- ⊟--- Three Times Normal Speed Playback
- ▲---- Four Times Normal Speed Playback

Recording Materials

Effects of Added Elements (Rewrite Characteristic)

## FIG. 5B

4T Mark Playback Stability

- ◆— Twice Normal Speed Playback
- ⊟---- Four Times Normal Speed Playback

Recording Materials

Effects of Added Elements (Playback Stability)

## FIG. 5C

4T Mark Storage Stability

- ◆— Four Times Normal Speed Recording
- ⊟---- Twice Normal Speed Recording

Recording Materials

Effects of Added Elements (Storage Stability)

## FIG. 6A

8T Mark Erase Characteristic Comparison
Recording Material  Sb/Te=4+V. Ge

Legend:
- Twice Normal Speed Playback
- Three Times Normal Speed Playback
- Four Times Normal Speed Playback

Recording Materials

Effects of Added Elements (Ge+V Rewrite Characteristic)

## FIG. 6B

4T Mark Playback Stability
Recording Material  Sb/Te=4+V. Ge

Legend:
- Twice Normal Speed Playback
- Four Times Normal Speed Playback

Recording Materials

Effects of Added Elements (Ge+V Playback Stability)

## FIG. 6C

4T Mark Storage Stability
Recording Material  Sb/Te=4+V. Ge

Legend:
- Four Times Normal Speed Recording
- Twice Normal Speed Recording

Recording Materials

Effects of Added Elements (Ge+V Storage Stability)

## FIG. 7A

8T Mark Erase Characteristic Comparison
Recording Material   Sb/Te=4+Nb, Ge

Legend:
- —◆— Twice Normal Speed Playback
- ---◱--- Three Times Normal Speed Playback
- ---▲--- Four Times Normal Speed Playback

DC Erase Ratio (dB)

Recording Materials

Effects of Added Elements (Ge+Nb Rewrite Characteristic)

## FIG. 7B

4T Mark Playback Stability
Recording Material   Sb/Te=4+Nb, Ge

Legend:
- —◆— Twice Normal Speed Playback
- ---◱--- Four Times Normal Speed Playback

Jitter Increase Rate
(%/One Playback)

Recording Materials

Effects of Added Elements (Ge+Nb Playback Stability)

## FIG. 7C

4T Mark Storage Stability
Recording Material   Sb/Te=4+Nb, Ge

Legend:
- —◆— Four Times Normal Speed Recording
- ---◱--- Twice Normal Speed Recording

Jitter Increase Rate
(%/hour)

Recording Materials

Effects of Added Elements (Ge+Nb Storage Stability)

## FIG. 8A

**8T Mark Erase Characteristic Comparison**
**Recording Material Sb/Te=4+Ta.Ge**

Legend:
- —◆— Twice Normal Speed Playback
- ---□--- Three Times Normal Speed Playback
- ---▲--- Four Times Normal Speed Playback

Y-axis: DC Erase Ratio (dB)
X-axis: Recording Materials

Effects of Added Elements (Ge+Ta Rewrite Characteristic)

## FIG. 8B

**4T Mark Playback Stability**
**Recording Material Sb/Te=4+Ta.Ge**

Legend:
- —◆— Twice Normal Speed Playback
- ---□--- Four Times Normal Speed Playback

Y-axis: Jitter Increase Rate (%/One Playback)
X-axis: Recording Materials

Effects of Added Elements (Ge+Ta Playback Stability)

## FIG. 8C

**4T Mark Storage Stability**
**Recording Material Sb/Te=4+Ta.Ge**

Legend:
- —◆— Four Times Normal Speed Recording
- ---□--- Twice Normal Speed Recording

Y-axis: Jitter Increase Rate (%/hour)
X-axis: Recording Materials

Effects of Added Elements (Ge+Ta Storage Stability)

## FIG. 9A

8T Mark Erase Characteristic Comparison
Recording Material Sb/Te=4+Ti.Ge

Legend:
- Twice Normal Speed Playback
- Three Times Normal Speed Playback
- Four Times Normal Speed Playback

DC Erase Ratio (dB) vs Recording Materials

Effects of Added Elements (Ge+Ti Rewrite Characteristic)

## FIG. 9B

4T Mark Playback Stability
Recording Material Sb/Te=4+Ti.Ge

Legend:
- Twice Normal Speed Playback
- Four Times Normal Speed Playback

Jitter Increase Rate (%/One Playback) vs Recording Materials

Effects of Added Elements (Ge+Ti Playback Stability)

## FIG. 9C

4T Mark Storage Stability
Recording Material Sb/Te=4+Ti.Ge

Legend:
- Four Times Normal Speed Recording
- Twice Normal Speed Recording

Jitter Increase Rate (%/hour) vs Recording Materials

Effects of Added Elements (Ge+Ti Storage Stability)

## FIG. 10A

8T Mark Erase Characteristic
Comparison

| | 2X |
| | 3X |
| | 4X |
| | 5X |

DC Erase Ratio (dB)

Recording Materials

Effects of Added Elements (Rewrite Characteristic)

## FIG. 10B

4T Mark Playback Stability

| | 2X PB |
| | 4X PB |

Jitter Increase Rate
(%/One Playback)

Recording Materials

Effects of Added Elements (Playback Stability)

## FIG. 10C

4T Mark Storage Stability

| | 2X REC |
| | 4X REC |

Jitter Increase Rate
(%/One Playback)

Recording Materials

Effects of Added Elements (Storage Stability)

**FIG. 11A**

8T Mark Erase Characteristic Comparison

| | Twice Normal Speed Erase |
|---|---|
| | Three Times Normal Speed Erase |
| | Four Times Normal Speed Erase |
| | five Times Normal Speed Erase |

DC Erase Ratio (dB)

Sb/Te=4    Sb/Te=6    Sb/Te=8

Playback Deterioration

Recording Materials

GeSbTe Material (Rewrite Characteristic)

**FIG. 11B**

4T Mark Playback Stability

| | Twice Normal Speed Playback |
|---|---|
| | Four Times Normal Speed Playback |

Jitter Increase Rate (%/One Playback)

Sb/Te=4    Sb/Te=5    Sb/Te=8

Playback Deterioration

Recording Materials

GeSbTe Material (Playback Stability)

**FIG. 11C**

4T Mark Storage Stability

| | Four Times Normal Speed Recording |
|---|---|
| | Twice Normal Speed Recording |

Jitter Increase Rate (%/hour)

Sb/Te=4    Sb/Te=5    Sb/Te=8

Playback Deterioration

Recording Materials

GeSbTe Material (Storage Stability)

## FIG. 12

| Composition of Recording Material | | | Twice Normal Speed | | | Four Times Normal Speed | | |
|---|---|---|---|---|---|---|---|---|
| Sb/Te | Ge | V | DC Erase Ratio | Playback Stability | Storage Stability | DC Erase Ratio | Playback Stability | Storage Stability |
| | atom% | atom% | dB | %/One Playback | %/hour | dB | %/One Playback | %/hour |
| 8 | 10 | 5 | 37.66 | 2.25E-05 | 1.00E-07 | 35.81 | 0.00017857 | 1.00E-07 |
| 8 | 10 | 8 | 30.23 | 1.00E-07 | 1.00E-07 | 30.69 | 1.00E-07 | 1.00E-07 |
| 8 | 8 | 7 | 32.72 | 1.00E-07 | 1.00E-07 | 33.92 | 0.00019391 | 1.00E-07 |

Examples of Various Characteristics Obtained When Ge and V Were Added to Sb/Te = 8 Recording Material

EP 1 724 772 A2

FIG. 13A

8T Mark Erase Characteristic
Twice Normal Speed

DC Erase Ratio (dB)

Erase Linear Velocity (m/sec)

8T Mark Erase Characteristic
Four Times Normal Speed

DC Erase Ratio (dB)

Erase Linear Velocity (m/sec)

Erase Characteristic

FIG. 13B

4T Mark Playback Stability
Twice Normal Speed Playback

Jitter Increase Rate
(%/One Playback)

Recording Linear Velocity (m/sec)

4T Mark Playback Stability
Four Times Normal Speed Recording

Jitter Increase Rate
(%/One Playback)

Recording Linear Velocity (m/sec)

Playback Stability

FIG. 13C

4T Mark Storage Stability
Twice Normal Speed Recording
90°C Nitrogen Atmosphere

Jitter Increase Rate
(%/hour)

Recording Linear Velocity (m/sec)

4T Mark Storage Stability
Four Times Normal Speed Recording
90°C Nitrogen Atmosphere

Jitter Increase Rate
(%/hour)

Recording Linear Velocity (m/sec)

Storage Stability

According to Recording Material of V5% + Sb/Te = 4.0

EP 1 724 772 A2

# FIG. 14A

8T Mark Erase Characteristic
Twice Normal Speed

DC Erase Ratio (dB)

Erase Linear Velocity (m/sec)

8T Mark Erase Characteristic
Four Times Normal Speed

DC Erase Ratio (dB)

Erase Linear Velocity (m/sec)

Erase Characteristic

# FIG. 14B

4T Mark Playback Stability
Twice Normal Speed Recording

Jitter Increase Rate
(%/One Playback)

Recording Linear Velocity (m/sec)

4T Mark Playback Stability
Four Times Normal Speed Recording

Jitter Increase Rate
(%/One Playback)

Recording Linear Velocity (m/sec)

Playback Stability

# FIG. 14C

4T Mark Storage Stability
Twice Normal Speed Recording
90°C Nitrogen Atmosphere

Jitter Increase Rate
(%/hour)

Recording Linear Velocity (m/sec)

4T Mark Storage Stability
Four Times Normal Speed Recording
90°C Nitrogen Atmosphere

Jitter Increase Rate
(%/hour)

Recording Linear Velocity (m/sec)

Storage Stability

According to Recording Material of V5% + Sb/Te = 4.0

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004017342 A